# EUROPÄISCHE PATENTSCHRIFT

(11) **EP 2 438 419 B1**
(45) Veröffentlichungstag und Bekanntmachung des Hinweises auf die Patenterteilung: **02.07.2014**
(21) Anmeldenummer: 10740530.0
(22) Anmeldetag: 26.07.2010
(51) Int. Cl.: G01M 3/02, G01M 3/28

(54) **VERFAHREN UND VORRICHTUNG ZUR DICHTHEITSMESSUNG VON VENTILSITZEN**
METHOD AND DEVICE FOR MEASURING THE TIGHTNESS OF VALVE SEATS
PROCÉDÉ ET DISPOSITIF DESTINÉS À MESURER L'ÉTANCHÉITÉ DE SIÈGES DE SOUPAPES

(30) Priorität: 27.07.2009 DE 102009034835
(43) Veröffentlichungstag der Anmeldung: 11.04.2012
(73) Patentinhaber: Stotz, Thomas, 70839 Gerlingen (DE)
(72) Erfinder: STAMENKOVIC, Milan, 70469 Stuttgart (DE)
(74) Vertreter: Manitz, Finsterwald & Partner GbR
(86) Internationale Anmeldenummer: PCT/EP2010/004567
(87) Internationale Veröffentlichungsnummer: WO 2011/012278

(56) Entgegenhaltungen:
- DE-A1- 2 836 925
- FR-A- 1 252 116
- GB-A- 285 320
- KR-A- 20090 048 091
- US-A- 3 835 878
- US-A- 5 372 031

## Beschreibung

Einer der wesentlichen Faktoren für die Motoreffizienz eines Benzin- oder Dieselmotors ist die gute Abdichtung der Einlass- und Auslassventile. Aus diesem Grund muss vor dem Motorzusammenbau jeder Ventilsitz eines Motorblocks auf Formgenauigkeit und/oder Leckage überprüft werden. Die zulässige Leckage liegt beispielsweise bei den meisten Pkw-Motoren im Bereich von 6 bis 30 NL/h.

Die FR 1 252 116 A zeigt in Fig. 1 einen Messdorn mit einem Messdornschaft 1, dessen eines Ende in einen Zündkerzenkanal 3 eingeschraubt ist, der an einem Zylinderkopf 4 eines Zylinders 5 ausgebildet ist. Durch den Messdornschaft 1 ist ein Fluidkanal 8, 12 geführt, mittels dem ein Messfluid in den Zylinder 5 einbringbar ist. Mit dem Messdorn kann eine Leckage der Einlass- und Auslassventile 6, 7 des Zylinders 5 sowie eine Leckage des Zylinders 5 gemessen werden.

Herkömmliche, hierin nicht druckschriftlich belegte Verfahren zur Leckageprüfung arbeiten als Durchflussmessverfahren, bei denen ein Messdorn mit einer Ringdüse verwendet wird, der in den Ventilsitz eingeführt wird. Der Messdorn weist einen Teller auf, der dem Ventilteller entspricht und am Ventilsitz anliegt. Die Messluft wird unterhalb der Berührungslinie zwischen Teller und Ventilsitz eingebracht und strömt sowohl nach oben als auch nach unten ab. Der tatsächliche Durchfluss der Messluft ist daher bei diesem bekannten Verfahren in der Regel vier- bis zehnmal höher als der Leckagedurchfluss des Ventilsitzes. Es sind daher Minimum- und Maximumeinstellnormale notwendig, über die dann aus dem gemessenen Durchfluss auf den realen Durchfluss des ausgemessenen Ventilsitzes umgerechnet werden kann.

Die Herstellung von Einstellnormalen ist aufwendig und teuer. Der weitere Nachteil solcher Messsysteme ist die nicht besonders hohe Wiederholgenauigkeit. Zudem muss der Bediener während der Messung den Messdorn in den Ventilsitz vertikal eindrücken. Die Handhabung kann daher einen Einfluss auf die Messung haben. Sind die Ventilsitze nicht zur Stirnfläche des Motorblocks parallel, müssen die Motorblöcke auf eine Kippvorrichtung gebracht werden, um die vertikale Messposition zum Messdorn während der Messung sicherzustellen.

Die KR 2009 0048091 A offenbart einen Messdorn gemäß dem Oberbegriff von Anspruch 1.

Der vorliegenden Erfindung liegt die Aufgabe zugrunde, einen verbesserten Messdorn sowie ein verbessertes Verfahren zum Überprüfen eines mit einem Ventilteller zusammenwirkenden Ventilsitzes eines Einlass- oder Auslasskanals bereitzustellen.

Die Aufgabe wird durch einen Messdorn mit den Merkmalen des Anspruchs 1 und ein Verfahren mit den Merkmalen des Anspruchs 10 gelöst. Bevorzugte Ausführungsformen und Weiterbildungen der Erfindung sind in den abhängigen Ansprüchen angegeben.

Ein Grundgedanke der Erfindung besteht darin, den Messdorn mit dem Messteller während der Messung festzulegen. Hierfür wird der Messdorn bevorzugt im Ventilsitz eingespannt. Hierdurch kann sichergestellt werden, dass sich der Messdorn während der Messung gegenüber dem Ventilsitz nicht bewegt. Ein Bedienereinfluss liegt daher nicht mehr vor.

Die Einspannung kann beispielsweise mittels einer Spannfeder erfolgen, die sich an einer im Motorblock vorhandenen Führungsbuchse abstützt und über eine Schräge am Messdornschaft elastisch radial aufgeweitet wird. Die Betätigung erfolgt beispielsweise durch einen Pneumatikzylinder, der sich oberhalb des Messtellers befindet und eine Steuerstange betätigt, an deren unterem Ende die Spannfeder befestigt ist. Damit ist eine automatische Einspannung des Messdorns im Ventilsitz möglich.

Gemäß einer bevorzugten Weiterbildung weist der Messdorn unter-halb des Messdorntellers einen Dichtring auf, der während der Messung gegenüber dem Ein- bzw. Auslasskanal abdichtet. Die Messluft wird zwischen Dichtring und Messdornteller in den Kanal eingebracht. Die Messluft kann dadurch nur noch nach oben entweichen, so dass der gemessene Durchfluss der tatsächlichen Leckage des Ventils entspricht.

Dies hat den Vorteil, dass keine Einstellnormalen mehr benötigt werden. Es sind keine Umrechnungen erforderlich, um von dem gemessenen Durchfluss auf den tatsächlichen Durchfluss zu schließen. Dadurch und auch durch die Einspannung des Messdorns ist die Wiederholgenauigkeit gegenüber bekannten Verfahren deutlich verbessert. Die Einspannung des Messdorns hat zudem den Vorteil, dass keine Kippvorrichtung mehr benötigt wird, um eine senkrechte Position des Messdorns gegenüber dem Ventilsitz zu gewährleisten. Dies ist vielmehr durch die Einspannung automatisch sichergestellt.

Der Dichtring ist bevorzugt zwischen einer Freigabestellung und einer Dichtstellung verstellbar. Dies erfolgt bevorzugt durch einen radial aufblasbaren Dichtring, der über einen Kanal mit Druckluft beaufschlagbar ist. Damit kann der Messdorn leicht in den Ventilsitz eingeführt und anschließend durch den Dichtring abgedichtet werden, indem der Dichtring durch die Druckluft radial aufgeweitet wird. Entsprechend kann der Messdorn durch Ablassen der Druckluft wieder leicht entnommen werden.

Das erfindungsgemäße Verfahren und die erfindungsgemäße Vorrichtung können vorteilhaft auch zur Rundheitsmessung von Ventilsitzen eingesetzt werden. Dies ergibt sich zum einen daraus, dass der gemessene Durchfluss direkt mit der Leckage korreliert und dass zum anderen der Messdorn gegenüber dem Ventilsitz während der Messung verankert, insbesondere eingespannt ist. Bei ausreichend gut geschliffenem Messteller kann aus dem gemessenen Durchfluss auf die Rundheit des Ventilsitzes geschlossen werden. Je größer die Unrundheit, desto größer ist der Durchfluss.

Zur Berechnung des Durchflusses können bekannte Durchflussmessverfahren verwendet werden, beispielsweise so genannte pneumatische Wandler mit Messdüse und zwei Sensoren. Der Durchfluss ist dann proportional der Wurzel aus der Druckdifferenz.

Ein Ausführungsbeispiel der Erfindung ist in der Zeichnung dargestellt und wird nachfolgend beschrieben. Es zeigen, jeweils in schematischer Darstellung,
- Fig. 1: einen Schnitt durch einen Teil eines Motorblocks mit eingesetzter erfindungsgemäßer Messvorrichtung vor der Messung, und
- Fig. 2: die Messvorrichtung von Fig. 1 in derselben Darstellung während der Messung.

Die Durchführung der Messung erfolgt folgendermaßen:

Zuerst wird der Messdorn M in den Ventilsitz 4 eines Einlass- oder Auslasskanals 9 eines Motorblocks 13 eingeführt. Dabei wird der Messdornschaft 6 durch die Führungsbuchse 8 des Motorblocks 13 zentriert. Anders als dargestellt, ragt dabei die Führungsbuchse 8 nicht in den Kanal 9 sondern befindet sich vollständig im Motorblockmaterial.

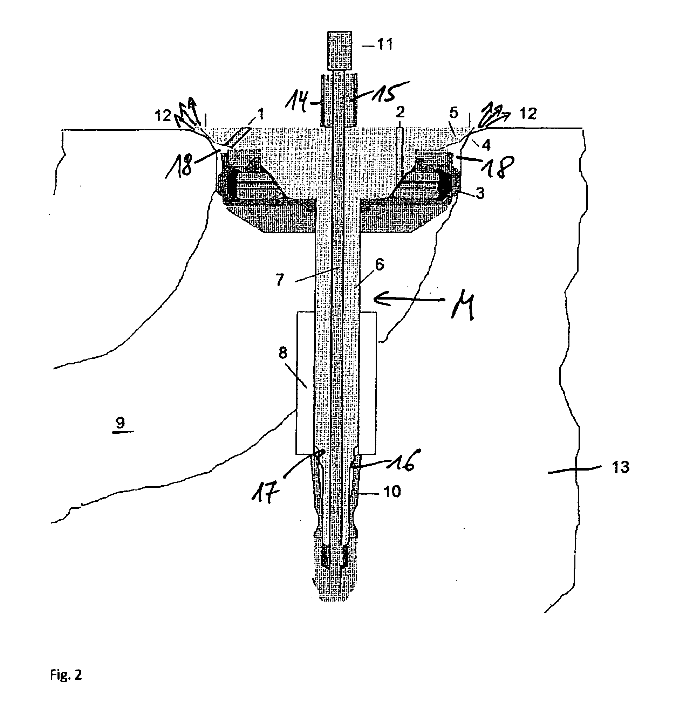

Der Messdorn berührt mit dem Messdornteller 5 dann den Ventilsitz 4. Dann wird der Kolben 11 der Kolbenzylinderanordnung 14 durch Einbringen von Druckluft in den Kolbenraum 15 nach oben gezogen. Damit wird auch die Steuerstange 7 mit der an ihrem unteren Ende angebrachten Spannfeder 10 nach oben gezogen, da die Steuerstange 7 fest mit dem Kolben 11 verbunden ist. Die Spannfeder 10 läuft mit Schrägen 16 auf Schrägen 17 am Messdornschaft 6 auf, wodurch sich die Spannfeder 10 elastisch radial öffnet, bis die Spannfeder 10 an der Führungsbuchse 8 anschlägt, wie dies in Fig. 2 dargestellt ist. Nun ist der Messdorn M eingespannt und gegenüber dem Ventilsitz 4 festgelegt.

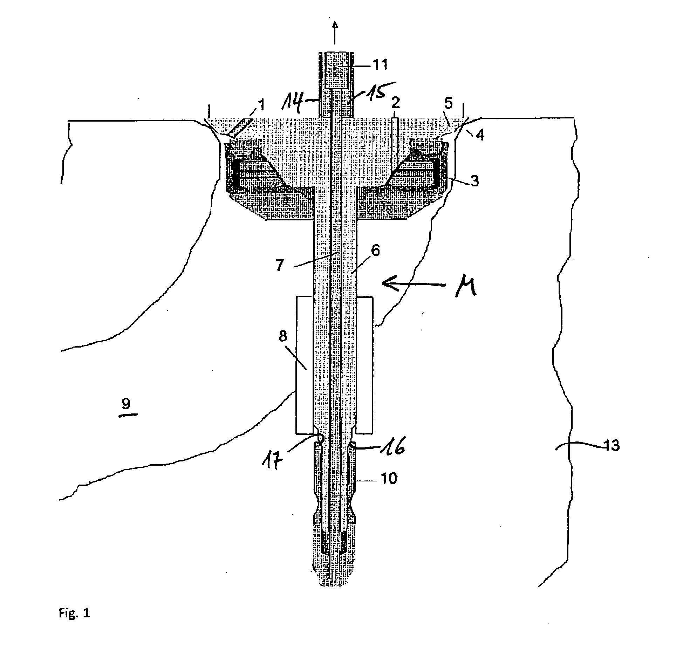

Als Nächstes wird über den Kanal 2 Druckluft in das Innere des Dichtrings 3 eingebracht, wodurch der Dichtring 3 radial expandiert. Diese expandierte Stellung ist in Fig. 2 gezeigt, während Fig. 1 die entlüftete Stellung beim Ein- und Ausführen des Messdorns M zeigt. Der Dichtring 3 wird dadurch fest an die Wandung des Einlass- oder Auslasskanals 9 angedrückt und sperrt dadurch den Raum 18 zwischen Ventilsitz 4 und Dichtring 3 gasdicht ab.

Nun wird die Messluft eingeschaltet und über Kanal 1 in den Raum 18 zwischen Messring 3 und Ventilsitz 4 eingebracht. Die Messluft kann nur über den Ventilsitz 4 nach oben abströmen, wie mit Pfeilen 12 angedeutet ist. Die gemessene Luftmenge entspricht daher der wahren Leckage während des späteren Motorbetriebs. Der Durchfluss über den Kanal 1 und über den Ventilsitz 4 gemäß den Pfeilen 12 ist also gleich, solange der Dichtring 3 ausreichend gut abdichtet. Für die Messung kann jedes bekannte absolute Durchflussmessgerät mit passendem Messbereich verwendet werden. Besondere messdornbezogene Einstellnormale für die Durchflussmessung sind nicht nötig, d.h., die Kalibrierung des Durchflussmessgeräts erfolgt ohne Einfluss des Messdorns.

Das Durchflussmessgerät wird an den Kanal 1 angeschlossen. Der Messdruck kann grundsätzlich beliebig gewählt werden, liegt in der Regel aber im Bereich von 0,5 bis 1 bar. Der Steuerdruck für die Kolbenzylinderanordnung liegt beispielsweise im Bereich von 2 bis 4 bar. Der Druck für den Abdichtring 3 liegt im Bereich von 1 bis 3 bar. Auch hier sind andere Druckwerte grundsätzlich möglich.

Nachdem der Messwert übernommen wurde, wird zuerst der Steuerdruck vom Dichtring 3 weggenommen. Dann wird der Spanndruck in der Kolbenzylindereinheit 11 weggenommen und durch Beaufschlagung eines oberhalb des Kolbens 11 angeordneten weiteren Druckraums die Steuerstange 7 wieder nach unten bewegt. Dadurch kehrt der Messdorn wieder in die in Fig. 1 dargestellte Stellung zurück, bei welcher der Dichtring eingezogen und die Spannfeder gelöst ist. Der Messdorn kann dadurch leicht aus dem Ventilsitz nach oben entnommen werden.

Da die Rundheit des Ventilsitzes mit dem gemessenen Durchfluss korreliert, kann der gleiche Durchflussmessdorn auch für die Rundheitsmessung verwendet werden. Vorteil dieser Verwendung des erfindungsgemäßen Messdorns für die Rundheitsmessung ist, dass keine mechanische Drehung der Messvorrichtung erforderlich ist.

## Patentansprüche

1. Messdorn zum Überprüfen eines mit einem Ventilteller zusammenwirkenden Ventilsitzes (4) eines Einlass- oder Auslasskanals (9), insbesondere eines Motorblocks (13), auf Formgenauigkeit und/oder Dichtheit mit einem Messdornschaft (6), der in einen in den Einlassoder Auslasskanal (9) mündenden Führungskanal, insbesondere für einen Ventilstößel oder dergleichen, einführbar ist,
einem am Messdornschaft (6) angeordneten, dem Ventilteller entsprechenden Messdornteller (5), der bei in den Führungskanal eingeführtem Messdornschaft (6) am Ventilsitz (4) zur Anlage kommt, und
einer durch den Messdornteller (5) geführten Fluidzufuhr (1) zum Einbringen des Messfluids in den Einlass- oder Auslasskanal (9), **dadurch gekennzeichnet, dass**
der Messdorn (M) eine Befestigungseinrichtung (10) zur Festlegung des Messdorns (M) gegenüber dem Ventilsitz (4) während der Messung aufweist.

2. Messdorn nach Anspruch 1,
**dadurch gekennzeichnet, dass**
die Befestigungseinrichtung als eine Einspanneinrichtung (10) zur Einspannung des Messdorns (M) in den Ventilsitz (4) ausgebildet ist.

3. Messdorn nach Anspruch 2,
**dadurch gekennzeichnet, dass**
die Einspanneinrichtung (10) dazu ausgebildet ist, den in den Führungskanal eingeführten Messdornschaft (6) an einer im Führungskanal vorhandenen Führungsbuchse (8) abzustützen und über den am Ventilsitz (4) zur Anlage kommenden Messdornteller (5) gegen den Ventilsitz (4) zu spannen.

4. Messdorn nach Anspruch 3,
**dadurch gekennzeichnet, dass** die Einspannvorrichtung eine Spannfeder (10) ist, und
am Messdornschaft (6) diese Spannfeder (10) derart angeordnet ist, dass diese bei in den Führungskanal eingeführtem Messdornschaft die Führungsbuchse (8) zur Abstützung des Messdornschafts (6) hintergreifen kann.

5. Messdorn nach Anspruch 4,
**dadurch gekennzeichnet, dass**
die Spannfeder (10) an ihrem unteren, vom Messdornteller (5) abgewandten Ende mit dem unteren Ende einer im Messdornschaft (6) geführten Steuerstange (7) gekoppelt und durch die Steuerstange (7) nach oben ziehbar ist, bis am oberen Ende der Spannfeder (10) ausgebildete Auflaufschrägen (16) gegen oberhalb der Spannfeder (10) am Messdornschaft (6) ausgebildete Auflaufschrägen (17) auflaufen und sich die Spannfeder (10) radial aufweitet.

6. Messdorn nach Anspruch 5,
dadurchgekennzeichnet, dass
das obere Ende der Steuerstange (7) mit einem, insbesondere im Messdornschaft (6) oder oberhalb des Messdornschafts (6) vorgesehenen, in einem Kolbenraum (15) angeordneten Kolben (11) einer Kolbenzylinderanordnung (14) gekoppelt ist, welcher durch Einbringung von Fluid in den Kolbenraum (15) nach oben ziehbar ist.

7. Messdorn nach einem der vorhergehenden Ansprüche,
**dadurch gekennzeichnet, dass**
unterhalb des Messdorntellers (5) eine Dichtung (3), insbesondere ein Dichtring, zur Abdichtung eines zwischen der Dichtung (3) und dem Messdornteller (5) ausgebildeten Raums (18) gegenüber dem Einlass- oder Auslasskanal (9) angeordnet ist, in welchen die durch den Messdornteller (5) geführte Fluidzufuhr (1) mündet.

8. Messdorn nach Anspruch 7,
**dadurch gekennzeichnet, dass**
die Dichtung (3) zwischen einer Freigabestellung und einer Dichtstellung verstellbar ist.

9. Messdorn nach Anspruch 8,
**dadurch gekennzeichnet, dass**
die Dichtung (3) über einen, insbesondere durch den Messdorn verlaufenden Druckluftkanal (2) zur Erreichung der Dichtstellung derart aufblasbar ist, dass die Dichtung (3) radial expandiert.

10. Verfahren zum Überprüfen eines mit einem Ventilteller zusammenwirkenden Ventilsitzes (4) eines Einlass- oder Auslasskanals (9), insbesondere eines Motorblocks (13), auf Dichtheit und/oder Rundheit mit einem Messdorn mit einem Messdornschaft (6), der in einen in den Einlass- oder Auslasskanal (9) mündenden Führungskanal, insbesondere für einen Ventilstößel oder dergleichen, einführbar ist, einem am Messdornschaft (6) angeordneten, dem Ventilteller entsprechenden Messdornteller (5), der bei in den Führungskanal eingeführtem Messdornschaft (6) am Ventilsitz (4) zur Anlage kommt, und einer durch den Messdornteller (5) geführten Fluidzufuhr (1) zum Einbringen des Messfluids in den Einlass- oder Auslasskanal (9), wobei die Menge des die Fluidzufuhr (1) durchströmenden Messfluids gemessen und aus der gemessenen Durchflussmenge auf die Rundheit und/oder die Dichtheit des Ventilsitzes (4) geschlossen wird,
**dadurch gekennzeichnet, dass**
der Messdorn (M) während der Messung gegenüber dem Ventilsitz (4) durch eine Befestigungsvorrichtung festgelegt wird.

11. Verfahren nach Anspruch 10,
**dadurch gekennzeichnet, dass**
ein Raum (18) unterhalb des Messdorntellers (5), in den die Fluidzufuhr mündet, gegenüber dem Einlass- oder Auslasskanal (9) abgedichtet wird.

## Claims

1. A measurement mandrel for checking the shape accuracy and/or leak tightness of a valve seat (4) of an inlet or outlet passage (9), in particular of an engine block (13), said valve seat cooperating with a valve disc, having a measurement mandrel shaft (6) which can be introduced into a guide passage, in particular for a valve plunger or the like, opening into the inlet or outlet passage (9);
having a measurement mandrel disc (5) which is arranged at the measurement mandrel shaft (6), which corresponds to the valve disc and which comes into contact with the valve seat (4) with a measurement mandrel shaft (6) introduced into the guide passage; and
having a fluid feed (1) guided through the measurement mandrel disc (5) for introducing the measurement fluid into the inlet or outlet passage (9),
**characterised in that**
the measurement mandrel (M) has a fastening device (10) for fixing the measurement mandrel (M) with respect to the valve seat (4) during the measurement.

2. A measurement mandrel in accordance with claim 1, **characterised in that**
the fastening device is configured as a clamping device (10) for clamping the measurement mandrel (M) into the valve seat (4).

3. A measurement mandrel in accordance with claim 2, **characterised in that**
the clamping device (10) is configured to support the measurement mandrel shaft (6) introduced into the guide passage at a guide bushing (8) present in the guide passage and to clamp it with respect to the valve seat (4) via the measurement mandrel disc (5) coming into contact with the valve seat (4).

4. A measurement mandrel in accordance with claim 3, **characterised in that**
the clamping apparatus is a clamping spring (10); and
**in that** this clamping spring (10) is arranged at the measurement mandrel shaft (6) such that it can engage behind the guide bushing (8) for supporting the measurement mandrel shaft (6) with a measurement mandrel shaft introduced into the guide passage.

5. A measurement mandrel in accordance with claim 4, **characterised in that**
the clamping spring (10) is coupled at its lower end remote from the measurement mandrel disc (5) with the lower end of a control bar (7) guided in the measurement mandrel shaft (6) and can be pulled upwardly by the control bar (7) until run-on chamfers (16) formed at the upper end of the clamping spring (10) run on with respect to run-on chamfers (17) formed above the clamping spring (10) at the measurement mandrel shaft (6) and the clamping spring (10) expands radially.

6. A measurement mandrel in accordance with claim 5, **characterised in that**
the upper end of the control bar (7) is coupled with a piston (11) of a piston-in-cylinder arrangement (14), said piston in particular being provided in the measurement mandrel shaft (6) or above the measurement mandrel shaft (6), being arranged in a piston space (15) and being able to be pulled upwardly by introduction of fluid into the piston space (15).

7. A measurement mandrel in accordance with any one of the preceding claims,
**characterised in that**
a seal (3), in particular a sealing ring, is arranged beneath the measurement mandrel disc (5) for sealing a space (18), which is formed between the seal (3) and the measurement mandrel disc (5), with respect to the inlet or outlet passage (9) into which the fluid feed (1) guided through the measurement mandrel disc (5) opens.

8. A measurement mandrel in accordance with claim 7, **characterised in that**
the seal (3) is adjustable between a release position and a sealing position.

9. A measurement mandrel in accordance with claim 8, **characterised in that**
the seal (3) can be inflated via a compressed air passage (2), in particular running through the measurement mandrel, to achieve the sealing position such that the seal (3) expands radially.

10. A method for checking the leak tightness and/or roundness of a valve seat (4) of an inlet or outlet passage (9), in particular of an engine block (13), said valve seat cooperating with a valve disc, having a measurement mandrel with a measurement mandrel shaft (6) which can be introduced into a guide passage, in particular for a valve plunger or the like, opening into the inlet or outlet passage (9);
having a measurement mandrel disc (5) which is arranged at the measuring mandrel shaft (6), which corresponds to the valve disc and which comes into contact with the valve seat (4) with a measurement mandrel shaft (6) introduced into the guide passage, and having a fluid feed (1) guided through the measurement mandrel disc (5) for the introduction of the measurement fluid into the inlet or outlet passage (9), wherein the quantity of the measurement fluid flowing through the fluid feed (1) is measured and a conclusion on the roundness and/or on the leak tightness of the valve seat (4) is drawn from the measured throughflow quantity, **characterised in that**
the measurement mandrel (M) is fixed opposite the valve seat (4) by a fastening apparatus during the measurement.

11. A method in accordance with claim 10,
**characterised in that**
a space (18) beneath the measurement mandrel disc (5) into which the fluid feed opens is sealed with respect to the inlet or outlet passage (9).

## Revendications

1. Mandrin de mesure pour contrôler un siège de soupape (4) coopérant avec un opercule de soupape dans un canal d'admission ou d'échappement (9), en particulier d'un bloc moteur (13), quant à l'exactitude de forme et/ou quant à l'étanchéité, comprenant une tige de mandrin de mesure (6) qui peut être introduite dans un canal de guidage débouchant dans le canal d'admission ou le canal d'échappement (9), en particulier pour un poussoir de soupape ou similaire,
comprenant un plateau de mandrin de mesure (5) agencé sur la tige de mandrin de mesure (6) et correspondant à l'opercule de soupape, plateau qui vient en contact contre le siège de soupape (4) lorsque la tige du mandrin de mesure (6) est introduite dans le canal de guidage,
et
comprenant une admission de fluide (1) menée à travers le plateau de mandrin de mesure (5) pour introduire le fluide de mesure dans le canal d'admission ou le canal d'échappement (9),
**caractérisé en ce que**
le mandrin de mesure (M) comprend un système de fixation (10) pour immobiliser le mandrin de mesure (M) par rapport au siège de soupape (4) pendant la mesure.

2. Mandrin de mesure selon la revendication 1,
**caractérisé en ce que** le système de fixation est réalisé sous la forme d'un système de serrage (10) pour serrer le mandrin de mesure (M) dans le siège de soupape (4).

3. Mandrin de mesure selon la revendication 2,
**caractérisé en ce que** le dispositif de serrage (10) est réalisé pour soutenir la tige du mandrin de mesure (6) introduite dans le canal de guidage contre une douille de guidage (8) présente dans le canal de guidage, et la serrer contre le siège de soupape (4) via le plateau de mandrin de mesure (5) venant en contact contre le siège de soupape (4).

4. Mandrin de mesure selon la revendication 3,
**caractérisé en ce que** le dispositif de serrage est un ressort de serrage (10), et ce ressort de serrage (10) est agencé sur la tige du mandrin de mesure (6) de telle façon que celui-ci est capable d'engager par l'arrière la douille de guidage (8) pour soutenir la tige du mandrin de mesure (6) lorsque la tige du mandrin de mesure est introduite dans le canal de guidage.

5. Mandrin de mesure selon la revendication 4,
**caractérisé en ce que** le ressort de serrage (10) est couplée avec l'extrémité inférieure d'une barre de commande (7) guidée dans la tige du mandrin de mesure (6), avec son extrémité inférieure détournée du plateau du mandrin de mesure (5), et est susceptible d'être tiré vers le haut à travers la barre de commande (7) jusqu'à ce que des pentes d'accès (16) formées à l'extrémité supérieure du ressort de serrage (10) viennent monter contre des pentes d'accès (17) réalisées sur la tige du mandrin de mesure (6) au-dessus du ressort de serrage (10), et le ressort de serrage (10) s'élargit radialement.

6. Mandrin de mesure selon la revendication 5,
**caractérisé en ce que** l'extrémité supérieure de la barre de commande (7) est couplée avec un piston (11), prévu en particulier dans la tige du mandrin de mesure (6) ou au-dessus de la tige du mandrin de mesure (6) et agence dans une chambre de piston (15), d'un agencement à piston-et-cylindre (14), le piston pouvant être tiré vers le haut en introduisant un fluide dans la chambre de piston (15).

7. Mandrin de mesure selon l'une des revendications précédentes, **caractérisé en ce qu'**un joint (3) est agencé au-dessous du plateau du mandrin de mesure (5), en particulier une bague d'étanchéité, pour étancher un espace (18) réalisé entre le joint (3) et le plateau du mandrin de mesure (5) vis-à-vis du canal d'admission ou d'échappement (9), espace dans lequel débouche l'admission de fluide (1) menée à travers le plateau du mandrin de mesure (3).

8. Mandrin de mesure selon la revendication 7,
**caractérisé en ce que** le joint (3) est réglable entre une position de libération et une position d'étanchement.

9. Mandrin de mesure selon la revendication 8,
**caractérisé en ce que** le joint (3) est gonflable via un canal à air comprimé (2) s'étendant en particulier à travers le mandrin de mesure, pour atteindre la position d'étanchement, de telle manière que le joint (3) se dilate radialement.

10. Procédé pour contrôler un siège de soupape (4) coopérant avec un opercule de soupape dans un canal d'admission et/ou d'échappement (9), en particulier d'un bloc moteur (13), quant à l'étanchéité et/ou à sa forme arrondie, comprenant un mandrin de mesure avec une tige de mandrin de mesure (6) qui peut être introduit dans un canal de guidage débouchant dans le canal d'admission et/ou le canal d'échappement (9), en particulier pour un poussoir de soupape ou similaire, comprenant un plateau de mandrin de mesure (5) agencé sur la tige du mandrin de mesure (6) et correspondant à l'opercule de soupape, plateau qui vient en contact contre le siège de soupape (6) quand la tige du mandrin de mesure (6) est introduite dans le canal de guidage, et comprenant une admission de fluide (1) menée à travers le plateau du mandrin de mesure (5) pour introduire le fluide de mesure dans le canal d'admission ou le canal d'échappement (9), dans lequel la quantité du fluide de mesure qui traverse l'admission de produit (1)est mesurée et à partir de la quantité mesurée du fluide ayant traversé on procède à une conclusion quant à la forme arrondie et/ou à l'étanchéité du siège de soupape (4),
**caractérisé en ce que**
le mandrin de mesure (M) est immobilisé pendant la mesure par rapport au siège de soupape (4) par un dispositif de fixation.

11. Procédé selon la revendication 10,
**caractérisé en ce qu'**un espace (18) au-dessous du plateau du mandrin de mesure (5), dans lequel débouche l'admission de fluide, est étanché par rapport au canal d'admission ou au canal d'échappement (9).
